# EUROPÄISCHE PATENTSCHRIFT

(11) **EP 1 898 019 B1**
(45) Veröffentlichungstag und Bekanntmachung des Hinweises auf die Patenterteilung: **24.03.2010**
(21) Anmeldenummer: 07017575.7
(22) Anmeldetag: 07.09.2007
(51) Int. Cl.: E04D 11/00, A01G 1/00

(54) **Vegetationssystem zur Begrünung**
Vegetation system for turfing
Système de végétation pour gazonnage

(30) Priorität: 09.09.2006 DE 102006042894; 06.03.2007 DE 102007011218
(43) Veröffentlichungstag der Anmeldung: 12.03.2008
(73) Patentinhaber: FlorDepot International GmbH, 50126 Bergheim (DE)
(72) Erfinder: Selders, Theo, 56626 Andermach (DE)
(74) Vertreter: Lenzing Gerber Stute

(56) Entgegenhaltungen:
- AT-B- 398 357
- DE-A- 3 502 296
- DE-A1- 3 507 563
- DE-A1- 19 629 669
- DE-U1- 9 414 587
- DE-U1- 29 904 660
- DE-U1- 29 909 906
- DE-U1-202004 013 643
- GB-A- 1 307 058
- GB-A- 1 475 994

## Beschreibung

Die vorliegende Erfindung betrifft ein Vegetationssystem zur Begrünung von insbesondere Dachflächen.

Bekannt sind Vegetationsanordnungen zur Begrünung von Dächern. Man kann zwischen intensiv und extensiv Begrünungen unterscheiden, wobei die intensive Dachbegrünung regelmäßig gepflegt und gegossen wird. Die extensiv genutzte Dachbegrünung hingegen bedarf kaum einer Pflege.

Einige weitere Vegetationselemente sind beispielsweise aus der DE 36 31 716C1, DE 42 19 275C2, EP706753 A1 oder der DE 195 23 406C1 bekannt. Hierbei handelt es sich um eine extensive Dachbegrünung, bei der mattenförmige Elemente, die aus Kokosfasern, Mineralwollfasern, aus Kunstfasern oder aus Matten mit Gemischen bestehen können, aneinandergelegt werden. Diese können vorkultiviert und/oder gärtnerisch gepflegt werden oder erst nach dem Aufbringen auf die zu begrünende Fläche mit Samen, Sprossen, Sporen oder keimfähiges Pflanzenmaterial versehen werden. Ebenfalls sind aus den vorgenannten Schriften Matten bekannt, in denen Substrat und Pflanzensamen oder Sprossen eingebracht sind oder anders auf- oder eingearbeitet sind. Hierbei werden die entsprechenden Matten sich selbst überlassen. Vorkultivierte Flächen sind auf Grund der Arbeitsintensität und der gärtnerischen Pflege mit höheren Kosten verbunden.

Die WO 00/40073 offenbart ein Vegetationselement zur Begrünung künstlicher oder natürlicher Flächen mit zweikeimblättrigen Pflanzen, wobei das Vegetationselement aufrollbar ist und der Träger aus einem Netz, einem Gewebe, Gewirke, Wirrlage oder einem Fasergemisch bestehen kann, das auf einem natürlichem oder künstlichem Boden auflegbar ist, wobei ein Bodenverbesserungssubstrat mit Druck oder durch Vermischen in eine obere Schicht des Bodens eingearbeitet wird, so dass eine Mischungsschicht entsteht.

Ferner ist aus der DE 20 2004 013 643 U1 eine Erosions- und belastungsstabile Begrünungsmatte unter Nutzung von Gummigranulat bekannt, wobei auf der Gummigranulatmatte ein Naturfaservlies mit darüber befindlicher dünnschichtiger Substratschicht angeordnet ist. DE 20 2004 013 643 U1 offenbart ein Vegetationssystem nach dem Oberbegriff des Anspruchs 1.

Nachteilig hierbei ist, dass die Wachstumsphase auf den bekannten Vegetationselementen unterschiedlich ausfallen kann, und diese bei einer Belegung auf einem Dach schwerer auszutauschen sind.

Der Erfindung liegt die Aufgabe zugrunde, ein möglichst einfaches Vegetationssystem zur Verfügung zu stellen, dass nicht die Nachteile des Standes der Technik aufweist und in kürzerer Zeit einsetzbar ist. Durch die Verwendung eines zweischichtigen Vegetationssystems, bestehend aus einer unteren Matte und einem oberen Vegetationselement, wobei beide unterschiedliche Charakteristika aufweisen, kann eine einfache Lösung zur Verfügung gestellt werden.

Der Gegenstand der vorliegenden Erfindung ist ein Vegetationssystem nach Anspruch 1. Optional kann eine Fixierhilfe vorgesehen werden, die auf oder in dem oberen Bereich des Vegetationselement angeordnet ist und dieses mit der unteren Matte verbindet.

In einer besonders vorteilhaften Ausführungsform ist die Schicht zwischen der unteren Matte und der Erdschicht substratlos ausgebildet.

Die untere Matte des Vegetationssystems weist erfindungsgemäß eine hohe Menge an Substrate auf. Unter dem Begriff "Substrat" werden im Rahmen der vorliegenden Erfindung Mineralstoffe, Substanzen mit einem hohen Porenvolumen zur Einlagerung von z.B. Wasser und Nährstoffen, Dünger, insbesondere Langzeitdünger, weitere Nährstoffe, wie Spurenelemente, Steinmehle, Zeolithe, Bims, andere Lavagesteine und ähnliches verstanden. Diese Inhaltstoffe werden in die untere Matte, die aus einem schwer abbaubaren oder nicht abbaubaren Polymerschaum besteht, beim Herstellungsprozess eingearbeitet. Die Matte weist eine hohe Konzentration dieser Inhaltsstoffe auf, um das Pflanzenwachstum und den Pflanzenerhalt optimal zu unterstützen.

Erfindungsgemäß ist die untere Matte des Vegetationssystems aus einem nicht abbaubaren offenporigen Polymerschaum aus Polyurethan aufgebaut. In einer weiteren Ausführungsform ist in der unteren Matte zusätzlich ein Geflecht mit eingearbeitet, das sowohl der Steifigkeit als auch der Wasserverteilung dient. Als Geflecht werden natürliche und/oder künstliche mit Polymeren versehene oder Mischmaterialien davon, die Wasser speichernde Materialien enthalten, verwendet.

Des weiteren ist die untere Matte mit mindestens zwei Ablaufkanälen in Längs- und Querrichtung ausgebildet. Bevorzugt sind Ausführungen in denen mindestens fünf Ablaufkanäle in Längsrichtung und mindestens vier in Querrichtung angeordnet sind. Die Matte besteht aus einzelnen Mattensegmenten. Sofern die Segmente eine rechteckige Form aufweisen, kann die Zahl der Ablaufkanäle in Längsrichtung entsprechend der Länge des Segmentes höher ausfallen. Vorteilhafterweise wird durch die Ablaufkanäle das Niederschlagswasser schnellstmöglich an die Regenrinnen oder vergleichbare Abführsysteme weitergeleitet ohne dass ein Wasserfilm entstehen kann, wie bei den bisher bekannten Systemen, so dass ein Ab- oder Verrutschen der begrünten Fläche ausgeschlossen ist. Oberhalb der unteren Mattensegmente ist das inhaltsärmere Vegetationselement angeordnet.

Als Pflanzen werden sowohl einkeimblättrige als auch zweikeimblättrige Pflanzen verwendet. Die Auswahl der Pflanzen zur Begrünung der Flächen wird entsprechend dem Klimaverhältnis des Standortes getroffen.

Das Vegetationselement besteht aus einem dünnen Schichtbereich aus Substrat, welche auch als Erdschicht bezeichnet werden kann, sowie einer darunter befindlichen Schicht, wobei diese Schicht des Vegetationselementes als Gewebe, Gewirke, Geflecht, Vlies oder ähnliches ausgestaltet sein kann.

Die zwischen der unteren Matte und der Erdschicht angeordnete "obere Schicht" kann als substratärmere oder substratlose Schicht ausgebildet sein. Bei der Ausgestaltung als substratlose Schicht muss das Substrat bzw. die Mineralien in der untern Matte in einer höheren Konzentration vorhanden sein, um das Wachstum der Wurzeln der ein und zweikeimblättrigen Pflanzen in die untere Schicht zu fördern.

Diese "obere Schicht" des Vegetationselementes kann aus natürlichen Materialien oder abbaubaren Polymeren aufgebaut sein und zusätzlich mit einem Geflecht, Gewebe oder Gewirke aus einem abbaubaren Polymeren oder einem natürlichen Material bestehen, das die Steifigkeit des Vegetationselementes erhöht. Die inhaltsärmere Schicht kann als eine Matte aus natürlichen Materialien aus der Gruppe von Sisal, Jute, Kokosfasern oder ähnlichen bestehen.

In einer weiteren Variante des erfindungsgemäßen Vegetationssystems ist sowohl die untere Matte als auch die substratärmeren Schicht mit einem Geflecht, Gewebe oder Gewirke aus einem abbaubaren Polymeren oder einem natürlichen Material ausgebildet.

In einer weiteren Ausführungsform des erfindungsgemäßen Vegetationssystems kann die "obere Schicht" des Vegetationselementes oder das gesamte Vegetationselement mittels einer Befestigung mit der unteren Matte fixiert werden. Diese Befestigung aus biologisch abbaubaren Materialien kann aus der Gruppe von Holz, abbaubaren Polymeren bestehen. Die Befestigung kann z.B. in einer Ausführung aus einem U-förmigen Profil bestehen, die auf dem Vegetationselement, bestehend aus der oberen Erdschicht und der oberen Schicht aufliegt und bis in die untere Matte reicht. Vorteilhafterweise wird hierdurch gewährleistet, dass bei ungünstiger Witterung z. B. starkem Wind, starkem Regen oder einer hohen Schneelast oder während des Tauens, das Vegetationselement nicht mitgerissen wird. Dies wird besonders kurz nach Fertigstellung des Vegetationssystems auf den Flächen gewährleistet. Bei extremen Standortbedingungen können gegebenenfalls auch Befestigungen verwendet werden, die nicht abbaubar sind. Als Befestigungen können neben den in den Figuren dargestellten U-förmigen Profilen auch dübelartige Konstruktionen verwendet werden.

Erfindungsgemäß ist die untere Matte als Mattensegment in definierten Größen ausgebildet. Hierbei wird entsprechend dem Untergrund und der Steilheit der zu begrünenden Fläche z.B. eine Größe von 20 cm mal 20 cm bis 1 m mal 1,5 m eingesetzt. Bevorzugt werden Matten von einer Größe von 100 cm mal 100 cm verwendet.

In einer weiteren Ausführungsform weisen die unteren Mattensegmente Vorrichtungen auf, die ein bündiges abschließen und/oder eine überlappende Anordnung lösbar miteinender ermöglichen. Hierbei bilden zwei sich überlappende Mattensegmente den bündig abschließenden Überlappungsbereich, der aus der Zentrierfläche und der darauf liegenden Überlappungsfläche besteht. Jedes Mattensegment besitzt auf einer Seite eine Zentrierfläche und auf der gegenüberliegenden Seite die Überlappungsfläche. Somit können die Mattensegmente nur in einer Variante bündig miteinander verlegt werden, so dass die Ablaufkanäle in einer Flucht verlaufen und keine Möglichkeit für einen Versatz besteht, der zu einem Ablaufstau und erhöhtem Wasserdruck führt und das Vegetationssystem zerstören würde.

In einer weiteren Variante für den Überlappungsbereich kann es sich um ein Vierkantprofil handeln, das zwischen zwei aneinander liegenden Mattensegmenten geschoben wird. Das Profil besteht aus biologisch abbaubaren Materialien, wie z.B. Holz oder Bambus oder abbaubare Polymere. Die Profile dieser Ausführungsvariante können an den Enden abgerundet sein, um die Beschädigung der Matte zu verhindern. In einer weiteren hier nicht dargestellten Form handelt es sich um ein rechteckiges Profil, dass in die Aussparungen von jeweils zwei Mattensegmenten eingeführt wird.

Die untere Matte weist Inhaltsstoffe aus der Gruppe von Dünger, Nährstoffen und Haftstoffen für das Wurzelwerk und ähnliches auf. Die Konzentration dieses Substrates ist höher als die der darüber liegenden oberen Schicht des Vegetationselementes. Insbesondere ist die Konzentration der Substrate in der unteren Matte mindestens 50% über der Konzentration der darüber liegenden Schicht, sofern diese nur Substratärmer ist. Bei einer substratlosen Matte richtet sich die Konzentration des Substrates nach der Substratkonzentration der Erschicht und ist mindestens um den Faktor 2 höher als die Substratkonzentration in der Erdschicht.

Ein weiterer Gegenstand der vorliegenden Erfindung ist die Ausgestaltung der Unterseite der untersten Matte, die mindestens zwei Ablaufkanäle in Längsrichtung und mindestens zwei Ablaufkanäle in Querrichtung aufweist.

Ein weiterer Gegenstand der vorliegenden Erfindung ist das Vlies. Das Vlies weist eine gewebte oder gewirkte Struktur auf, die gegebenenfalls mit Kunststofffasern verstärkt ist. Das Vlies ist vollständig abbaubar. Die Kunststofffasern können ein Gewebe oder ein Gitter bilden, dass die Steifigkeit und die Stabilität verbessert.

Ein weiterer Gegenstand der vorliegenden Erfindung ist die Verwendung des Vegetationssystems und des Vegetationselementes zur Begrünung von Dächern. Hierbei sind sowohl Flachdächer als auch Spitzdächer.

Eine weitere Verwendung ist die Kombination des Vegetationssystems und des Vegetationselementes auf einem Flachdach in Verbindung mit Solaranlagen. Vorteilhafterweise wird trotz der Aufbauten durch die Solaranlage keine Verminderung des Pflanzenwachstums unterhalb der Solaranlage beobachtet. Zusätzlich wird durch das Mikroklima im Bereich der Solarunterseite und dem Vegetationssystem eingestellt, bei dem durch das abendliche Kondensat an den Bauteilen eine einfache Bewässerung am frühen Morgen gewährleistet ist.

Die Figuren 1 bis 5 dienen zur Erläuterung der erfindungsgemäßen Gegenstände, ohne sie jedoch darauf zu begrenzen.

Es zeigen:
- Figur 1 u. 1 a:: Querschnittsdarstellungen eines ersten und zweiten erfindungsgemäßen Vegetationssystems;
- Figur 2a:: Querschnittsdarstellung von aneinanderlegbaren Matten;
- Figur 2b:: Querschnittsdarstellung weiterer möglicher Matten;
- Figur 3:: Querschnittsdarstellung und Draufsicht einer Matte mit den Ablaufkanälen;
- Figur 4:: unterschiedlichen Querschnittsformen der Ablaufkanäle der Matten;
- Figur 5:: einen Querschnitt durch eine weitere erfindungsgemäßen Ausführungsform des Vegetationssystems;

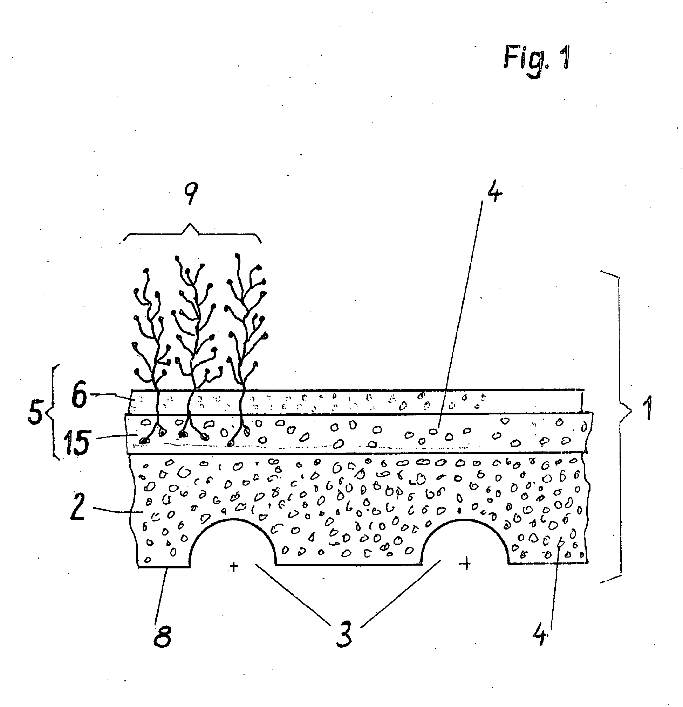

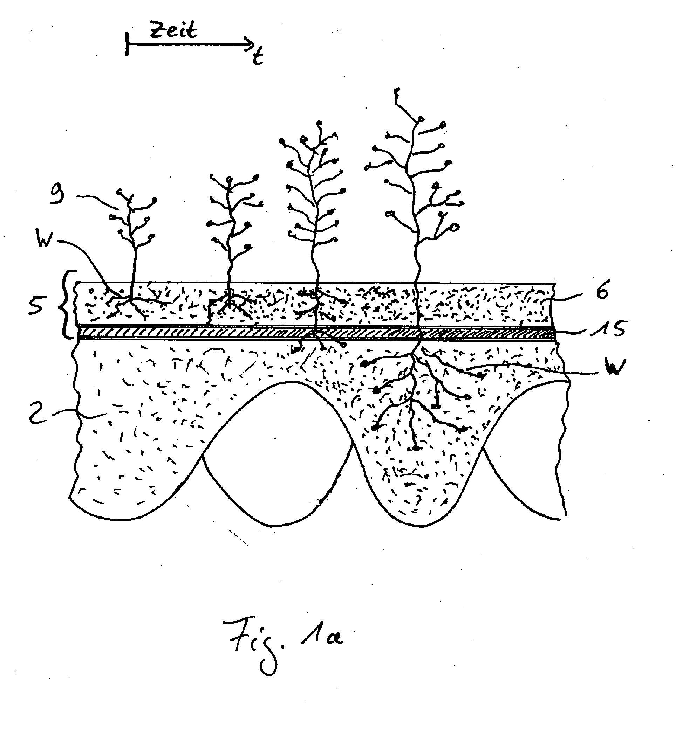

In der Figur 1 ist eine erste Ausführungsform eines erfindungsgemäßen Vegetationssystems (1) dargestellt. Die unteren Mattesegmente (2) weisen erfindungsgemäß eine hohe Menge an Substraten (4) auf. Unter dem Begriff "Substrat/Substrate" wird im Rahmen der vorliegenden Erfindung Mineralstoffe bzw. -stoffe sowie Substanzen mit einem hohen Porenvolumen zur Einlagerung von z.B. Wasser und Nährstoffen, Dünger, weitere Nährstoffe, wie Spurenelemente, Steinmehle, Zeolithe, Bims, andere Lavagesteine und ähnliches verstanden. Diese Substrate werden in die untere Matte, die aus einem schwerabbaubaren oder nicht abbaubaren Schaum besteht, während ihrer Herstellung mit eingearbeitet. Die Matte (2) weist eine hohe Konzentration dieser Inhaltsstoffe auf, um das Pflanzenwachstum und den Pflanzenerhalt optimal zu unterstützen. Die unteren Mattensegmente (2) weisen an der Mattensegmentunterseite (8) mindestens zwei Ablaufkanäle (3) in Längs- und Querrichtung auf. Vorteilhafterweise wird durch die Ablaufkanäle das Niederschlagswasser schnellstmöglich an die Regenrinnen oder vergleichbare Abführsysteme des Daches weitergeleitet, ohne dass ein Wasserfilm entstehen kann, so dass ein Ab- oder Verrutschen der begrünten Fläche ausgeschlossen ist. Oberhalb der unteren Mattensegmente (2) ist das substratärmere bzw. mineralstoffärmere Vegetationselement (5) angeordnet. Das Vegetationselement (5) besteht aus einem Schichtbereich (15) und einer darüber angeordneten dünnen Substrat- bzw. Erdschicht (6). Die Schicht (15) des Vegetationselementes kann als Gewebe, Gewirke, Geflecht, Vlies oder ähnliches ausgestaltet sein.

Die obere Schicht (15) des Vegetationselementes kann aus einem Gewebe, Gewirken, Geflechten, Vliesen oder ähnlichen bestehen. In einer bevorzugten Ausführung werden Vliese verwendet. Als Materialien werden solche aus der Gruppe von natürlich abbaubaren Materialien wie z.B. Kokos-, Baumwoll-, Hanf-, Jute-, Sisal-, oder ähnlichen Fasern eingesetzt. Zusätzlich kann die obere Schicht (15) zur besseren Steifigkeit ein verstärktes Fasermaterial aus abbaubaren Kunststofffäden als Geweben, Gewirken oder grobes Gewirke aufweisen. Hierbei kann es sich um Polyethylen, Polyurethane, Polypropylene oder ähnliche Materialien handeln.

Die Figur 1 a zeigt eine Querschnittsdarstellung einer zweiten möglichen Ausgestaltung des erfindungsgemäßen Vegetationssystems (1). Bei diesem Vegetationssystem ist die Schicht (15) des Vegetationselementes (5) wesentlich dünner als die Substratschicht bzw. Erdschicht (6) und der unteren Matten (2) ausgebildet. Die Pflanzen (9) wurzeln zunächst in der Erd- bzw. Substratschicht (6). Zur Dachbegrünung werden zuerst die Matten (2) aufgelegt, wonach dann die Vegetationselemente (5) mit den bereits eingesähten und/oder verwurzelten Pflanzen (9) auf die bereits verlegten Matten (2) aufgelegt werden. Optional können die Vegetationselemente noch mittels Befestigungen (13) an den Matten befestigt werden. Es ist jedoch darauf zu achten, dass die Befestigungen derart ausgebildet sind, dass sie nicht durch die Dachabdeckung hindurchtreten könne, sofern ein Druck in Richtung Dachabdeckung auf sie ausgeübt wird.

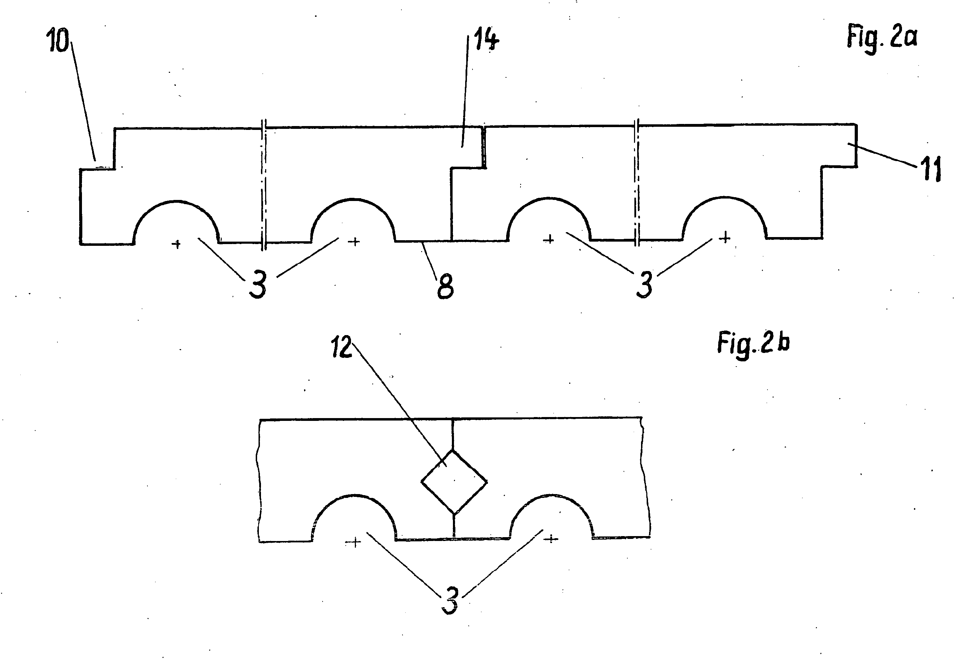

In der Figur 2a sind zwei aneinandergelegte untere Matten (2) dargestellt. Der Überlappungsbereich (14) besteht aus der Zentrierfläche (10), auf der die Überlappungsfläche (11) bündig anliegt. Jedes Mattensegment (2) besitzt auf einer Seite eine Zentrierfläche (10) und auf der gegenüberliegenden Seite die Überlappungsfläche (11). Somit können die Mattensegmente nur in einer Variante bündig miteinander verlegt werden, so dass die Ablaufkanäle in einer Flucht verlaufen und keine Möglichkeit für eine Versatz besteht, der zu einem Ablaufstau und erhöhtem Wasserdruck führt und das Vegetationssystem zerstören würde.

In der Figur 2b ist eine weitere Variante für den Überlappungsbereich (14) dargestellt. In der hier dargestellten Ausführung handelt es sich um ein Vierkantprofil, das zwischen zwei aneinander liegenden Mattensegmenten geschoben wird. Das Profil besteht aus biologisch abbaubaren Materialien, wie z.B. Holz oder Bambus oder abbaubare Polymere. Die Profile dieser Ausführungsvariante können an den Enden abgerundet sein, um die Beschädigung der Matte zu verhindern. In einer weiteren hier nicht dargestellten Form handelt es sich um ein rechteckiges Profil, dass in die Aussparungen von jeweils zwei Mattensegmenten eingeführt wird.

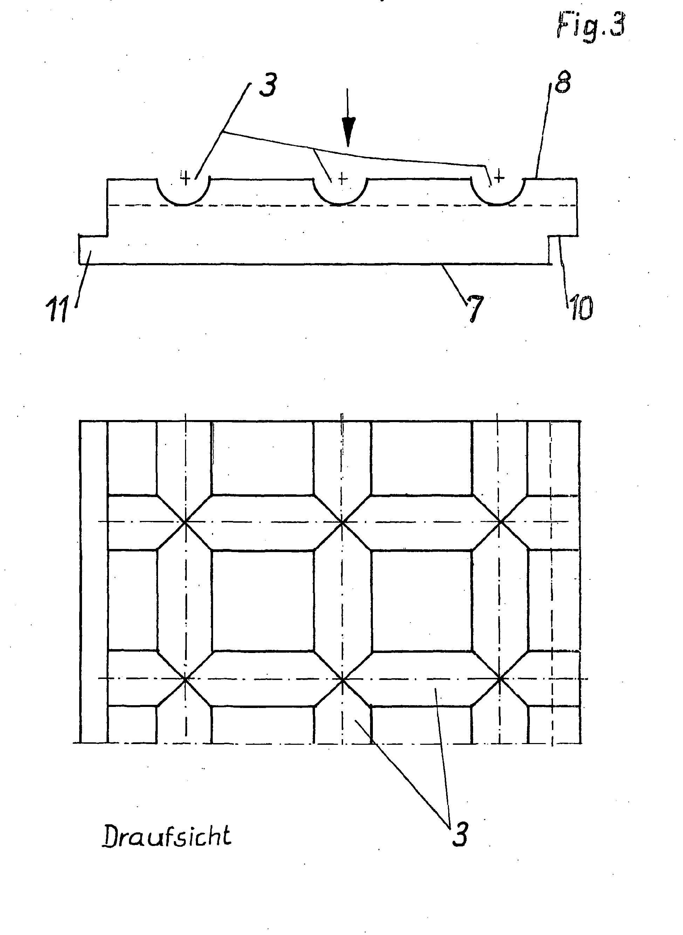

In der Figur 3 ist ein erfindungsgemäßes unteres Mattensegment (2) dargestellt. Hierbei ist das Mattensegment im oberen Bereich mit der Oberseite (7) nach unten und den Ablaufkanälen (3) nach oben dargestellt. In der vorliegenden Figur 3 ist die Ausgestaltung der Ablaufkanäle in halbrunder Ausführung gewählt worden. An den Außenseiten befinden sich die Überlappungsfläche (11) auf der linken Seite und die Zentrierfläche (10), die gemeinsam den Überlappungsbereich (14) im montierten Zustand bilden. Im unteren Bildbereich ist die Draufsicht dargestellt, in der die sich kreuzenden Ablaufkanäle zu erkennen sind

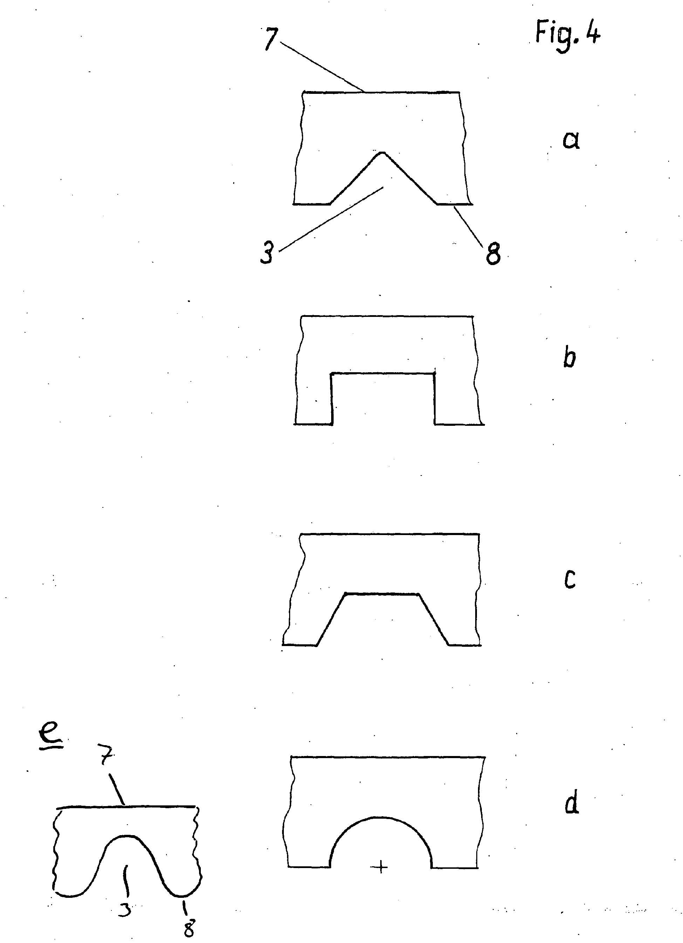

In der Figur 4 sind die unterschiedlichen Ausgestaltungen der Ablaufkanäle (3) in der unteren Matte (2) dargestellt ohne diese auf die dargestellten Formen zu beschränken. Neben einer V-förmige Ausführung (Fig.4a), einer rechteckigen Ausführung (Fig.4b) sind ebenfalls eine trapezförmige (Fig. 4c) und eine halbrunde (Fig. 4d) abgebildet. Bevorzugt wird die halbrunde Ausführung der Fig. 4d, die einen optimierten Ablauf auch von Schwebstoffen und kleinen Teilchen ermöglicht. Eine Verstopfung wird so stark reduziert, wenn nicht sogar ausgeschlossen. Die Figur 4e zeigt eine weitere runde Ausführungsform der Ablaufkanäle.

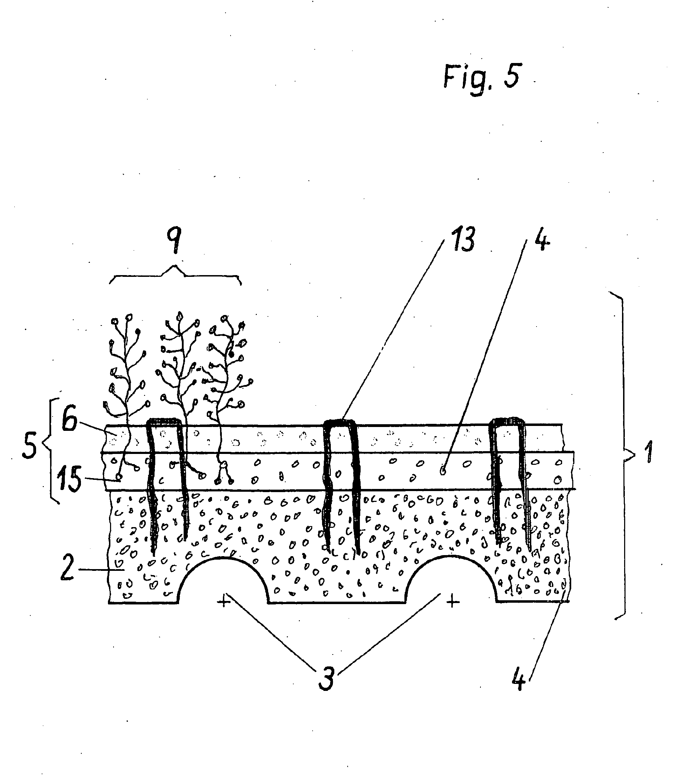

In der Figur 5 ist einen Querschnitt durch eine weitere erfindungsgemäße Ausführung des Vegetationssystems dargestellt. Hier wird mittels Befestigungen (13) eine bessere Haftung des Vegetationselementes (5) mit der unteren Matte (2) gewährleistet. Die Befestigung (13) besteht in der vorliegenden Ausführung aus einem U-förmigen Profil, dass auf dem Vegetationselement (5), bestehend aus der oberen Erdschicht (6) und der oberen Schicht (15), aufliegt und bis in die untere Matte (4) reicht. Vorteilhafterweise wird hierdurch gewährleistet, dass bei ungünstiger Witterung z. B. starkem Wind, starkem Regen oder einer hohen Schneelast oder während des Tauens, das Vegetationselement (5) nicht mitgerissen wird. Bei extremen Standortbedingungen können gegebenenfalls auch Befestigungen verwendet werden, die nicht abbaubar sind. Als Befestigungen können neben den dargestellten U-förmigen Profilen auch Konstruktionen verwendet werden, die dem eines Dübel entsprechen.

### Bezugszeichenliste

- 1: Vegetationssystem
- 2: Matte
- 3: Ablaufkanäle
- 4: Substrat
- 5: Vegetationselement
- 6: Erdschicht, bestehend aus Substrat bzw. Substratgemisch
- 7: Mattenoberseite
- 8: Mattenunterseite
- 9: Pflanze
- 10: Zentrierfläche
- 11: Überlappungsfläche
- 12: Profil
- 13: Befestigung
- 14: Überlappungsbereich
- 15: Obere Schicht, Bestandteil des Vegetationselements 5

## Patentansprüche

1. Vegetationssystem (1) zur Bildung einer Begrünung auf Flächen, insbesondere Dächern von Gebäuden, wobei das Vegetationssystem (1) als unterste Schicht eine Matte (2) mit Substraten zum Pflanzenwachstum aufweist, mit einem über der Matte (2) liegendem Vegetationselement (5), bestehend aus einer dünnen Erdschicht (6) mit Substrat und einer substratärmeren Schicht (15) mit einer Substratkonzentration, die niedricter ist als die Substratkonzentration der unteren Matte 2) oder mit einer substratlosen Schicht (15), in dem die Pflanzen (9) angeordnet sind, **dadurch gekennzeichnet, daß** die untere Matte (2) aus einem schwer abbaubaren oder nicht abbaubaren Polymerschaum besteht, in dem die Substrate eingearbeitet sind.

2. Vegetationssystem nach Anspruch 1, **dadurch gekennzeichnet, dass** mindestens eine Befestigung (13) das Vegetationselement (5) mit der unteren Matte verbindet.

3. Vegetationssystem nach Anspruch 1 oder 2, **dadurch gekennzeichnet, dass** die untere Matte (2) mindestens zwei Ablaufkanäle (3) in Längs- und Querrichtung aufweist.

4. Vegetationssystem nach einem der vorhergehenden Ansprüche 1 bis 3, **dadurch gekennzeichnet, dass** fünf oder mehr Ablaufkanäle in Längsrichtung und vier oder mehr Ablaufkanäle in Querrichtung angeordnet sind.

5. Vegetationssystem nach einem der vorhergehenden Ansprüche, **dadurch gekennzeichnet, dass** die untere Matte (2) einem nicht abbaubaren offenporigen Polymerschaum aus Polyurethan aufgebaut ist.

6. Vegetationssystem nach einem der vorhergehenden Ansprüche, **dadurch gekennzeichnet, dass** die untere Matte (2) als Mattensegment ausgebildet ist, und dass die einzelnen Mattensegmente nur in einer Richtung oder in jeder Richtung miteinander verbindbar, insbesondere ineinander steckbar, sind.

7. Vegetationssystem nach einem der Ansprüche 1 bis 4, **dadurch gekennzeichnet, dass** die unteren Matten (2) als Mattensegmente bündig abschließen, insbesondere im Überlappungsbereich von Zentrierfläche und Überlappungsfläche lösbar miteinender verbunden sind.

8. Vegetationssystem nach einem der Ansprüche 1 bis 7, **dadurch gekennzeichnet, dass** die untere Matte (2) als Mattensegment ausgebildet ist, wobei die einzelnen Mattensegmente aneinandergelegt die zu begrünende Fläche bedecken, und dass die Vegetationselemente (5) ebenfalls als Mattensegmente (5) ausgebildet sind, die ein untere Schicht (15) aus Gewebe, Gewirk, Geflecht oder Vlies und eine obere Substratschicht (6) aufweisen, wobei die Mattensegmente (2, 5) überlappend zueinander angeordnet sind.

9. Vegetationssystem nach Anspruch 8, **dadurch gekennzeichnet, dass** die Mattensegmente (2) andere Abmessungen aufweisen als die Vegetations-Mattensegmente (5).

10. Vegetationssystem nach einem der vorhergehenden Ansprüche, **dadurch gekennzeichnet, dass** die untere Matte (2) Substrate, insbesondere in Form von Mineralstoffen, aus der Gruppe von Dünger, Nährstoffen, Haftstoffen für das Wurzelwerk und ähnliche, enthält.

11. Vegetationssystem nach einem der vorhergehenden Ansprüche, **dadurch gekennzeichnet, dass** die Konzentration der Substrate in den unteren Matten (2) mindestens 50% über der Konzentration der darüber liegenden Schicht (5) liegt.

12. Vegetationssystem nach einem der vorhergehenden Ansprüche, **dadurch gekennzeichnet, dass** die obere Schicht (15) des Vegetationselementes (5) als Gewebe, Gewirke, Geflecht, Vlies oder ähnliches ausgestaltet ist, wobei über der oberen Schicht (15) die Erdschicht (6), bestehend aus Substraten, insbesondere Lava, Bims, Zelolid und Kompostern, oder einem Gemenge davon, angeordnet ist.

13. Vegetationssystem nach einem der vorhergehenden Ansprüche, **dadurch gekennzeichnet, dass** die obere Schicht (15) aus natürlichen Materialien oder abbaubaren Polymeren aufgebaut ist und zusätzlich mit einem Geflecht oder Gewirke aus einem abbaubaren Polymeren besteht.

14. Vegetationssystem nach einem der vorhergehenden Ansprüche, **dadurch gekennzeichnet, dass** die obere Schicht (15) aus natürlichen Materialien aus der Gruppe von Sisal, Jute, Kokosfasern, ähnlichen oder Mischungen dieser besteht.

15. Vegetationssystem nach einem der vorhergehenden Ansprüche, **dadurch gekennzeichnet, dass** das Vegetationselement (5) mittels einer Befestigung (13) mit der unteren Matte (2) fixierbar ist.

16. Vegetationssystem nach Anspruch 15, **dadurch gekennzeichnet, dass** die Befestigung (13) aus biologisch abbaubaren Materialien aus der Gruppe von Holz, abbaubaren Polymeren oder ähnlichen bestehen kann.

17. Vegetationssystem nach einem der vorhergehenden Ansprüche, **dadurch gekennzeichnet, dass** die Befestigung (13) als grobes Maschengeflecht auf der oberen Schicht (15) und innerhalb der Erdschicht (6) angeordnet ist.

18. Vegetationssystem nach einem der vorhergehenden Ansprüche, **dadurch gekennzeichnet, dass** die zu begrünenden Flächen gerade, horizontal, wellig oder schräg sind.

19. Verwendung des Vegetationssystems (1) nach einem der vorhergehenden Ansprüche zur Begrünung von Flächen, insbesondere von Dächern.

## Claims

1. Vegetation system (1) to create a green area on surfaces, in particular on roofs of buildings, the vegetation system (1) having as the lowest layer a mat (2) with substrates for plant growth, with a vegetation element (5) which is positioned on top of the mat (2) and consists of a thin layer of soil (6) with substrate and a layer (15) which is relatively poor in substrate and has a substrate concentration which is lower than the substrate concentration of the lower mat (2) or with a layer (15) without substrate in which the plants (9) are arranged, **characterised in that** the lower mat (2) consists of a difficultly degradable or nondegradable polymer foam in which the substrates are incorporated.

2. Vegetation system according to claim 1, **characterised in that** at least one attachment means (13) connects the vegetation element (5) to the lower mat.

3. Vegetation system according to either claim 1 or claim 2, **characterised in that** the lower mat (2) has at least two runoff channels (3) in the longitudinal and transverse directions.

4. Vegetation system according to any one of the preceding claims 1 to 3, **characterised in that** five or more runoff channels are arranged in the longitudinal direction and four or more runoff channels are arranged in the transverse direction.

5. Vegetation system according to any one of the preceding claims, **characterised in that** the lower mat (2) is constructed from a nondegradable open-pore polyurethane polymer foam.

6. Vegetation system according to any one of the preceding claims, **characterised in that** the lower mat (2) is configured as mat segments and **in that** the individual mat segments can be joined together, in particular can be inserted one inside another, in only one direction or in every direction.

7. Vegetation system according to any one of claims 1 to 4, **characterised in that** the lower mats (2) are flush as mat segments, in particular are joined together detachably in the overlap region of centring surface and overlapping surface.

8. Vegetation system according to any one of claims 1 to 7, **characterised in that** the lower mat (2) is configured as mat segments, the individual mat segments covering the surface to be planted with greenery when positioned adjoining one another, and **in that** the vegetation elements (5) are also configured as mat segments (5) which have a lower layer (15) of woven fabric, knitted fabric, interwoven fabric or non-woven fabric and an upper substrate layer (6), the mat segments (2, 5) being in a mutually overlapping arrangement.

9. Vegetation system according to claim 8, **characterised in that** the mat segments (2) have different dimensions compared to the vegetation mat segments (5).

10. Vegetation system according to any one of the preceding claims, **characterised in that** the lower mat (2) contains substrates, particularly in the form of mineral substances, from the group of fertilisers, nutrients, adhesives for the roots and the like.

11. Vegetation system according to any one of the preceding claims, **characterised in that** the concentration of substrates in the lower mats (2) is at least 50% higher than the concentration of the layer (5) positioned above.

12. Vegetation system according to any one of the preceding claims, **characterised in that** the upper layer (15) of the vegetation element (5) is configured as woven fabric, knitted fabric, interwoven fabric or non-woven fabric or the like, the layer of soil (6), consisting of substrates, in particular lava, pumice, zeolites and composters, or a mixture thereof, being arranged above the upper layer (15).

13. Vegetation system according to any one of the preceding claims, **characterised in that** the upper layer (15) is composed of natural materials or degradable polymers and additionally consists of an interwoven or knitted fabric of a degradable polymer.

14. Vegetation system according to any one of the preceding claims, **characterised in that** the upper layer (15) consists of natural materials from the group of sisal, jute, coconut fibres, the like or mixtures thereof.

15. Vegetation system according to any one of the preceding claims, **characterised in that** the vegetation element (5) can be fixed to the lower mat (2) by an attachment means (13).

16. Vegetation system according to claim 15, **characterised in that** the attachment means (13) can consist of biologically degradable materials from the group of wood, degradable polymers or the like.

17. Vegetation system according to any one of the preceding claims, **characterised in that** the attachment means (13) is arranged as coarse meshwork on the upper layer (15) and inside the layer of soil (6).

18. Vegetation system according to any one of the preceding claims, **characterised in that** the surfaces to be planted with greenery are straight, horizontal, undulating or oblique.

19. Use of the vegetation system (1) according to any one of the preceding claims for planting surfaces, in particular roofs, with greenery.

## Revendications

1. Système de plantations (1) destiné à la végétalisation de surfaces, en particulier de toits d'immeubles, où le système de plantations (1) comprend, comme couche inférieure, un tapis (2) avec des substrats pour la croissance des plantes, ainsi qu'un élément végétal (5) reposant sur le tapis (2) et composé d'une mince couche de terre (6) avec du substrat et d'une couche pauvre en substrat (15) présentant une concentration en substrat qui est inférieure à la concentration en substrat du tapis inférieur (2), ou d'une couche (15) dépourvue de substrat, dans laquelle les plantes (9) sont placées, **caractérisé en ce que** le tapis inférieur (2) est constitué en mousse polymère difficilement dégradable ou non dégradable, dans lequel les substrats sont incorporés.

2. Système de plantations selon la revendication 1, **caractérisé en ce qu'**au moins une fixation (13) relie l'élément végétal (5) au tapis inférieur.

3. Système de plantations selon la revendication 1 ou la revendication 2, **caractérisé en ce que** le tapis inférieur (2) comporte au moins deux canaux d'écoulement (3) en direction longitudinale et en direction transversale.

4. Système de plantations selon l'une des revendications 1 à 3, **caractérisé en ce que** cinq canaux d'écoulement ou plus sont disposés en direction longitudinale et quatre canaux ou plus en direction transversale.

5. Système de plantations selon l'une des revendications précédentes, **caractérisé en ce que** le tapis inférieur (2) est constitué d'une mousse polymère en polyuréthane à pores ouverts non dégradable.

6. Système de plantations selon l'une des revendications précédentes, **caractérisé en ce que** le tapis inférieur (2) est réalisé comme segment de tapis, et **en ce que** les différents segments de tapis peuvent être raccordés l'un à l'autre, en particulier par embrochement, dans une seule direction seulement, ou peuvent être raccordés l'un à l'autre dans les deux directions.

7. Système de plantations selon l'une des revendications 1 à 4, **caractérisé en ce que** les tapis inférieur (2) sont affleurants entre eux en tant que segments de tapis, et raccordés entre eux de manière amovible en particulier dans la zone de chevauchement entre la surface de centrage et la surface de chevauchement.

8. Système de plantations selon l'une des revendications 1 à 7, **caractérisé en ce que** le tapis inférieur (2) est réalisé comme segment de tapis, les différents segments de tapis posés l'un contre l'autre couvrant la surface à végétaliser, et **en ce que** les éléments végétaux (5) sont également réalisés comme segments de tapis (5) comportant une couche inférieure (15) en tissu, tissu à mailles, treillis ou voile non tissé et une couche de substrat supérieure (6), les segments de tapis (2, 5) étant disposés en chevauchement les uns par rapport aux autres.

9. Système de plantations selon la revendication 8, **caractérisé en ce que** les segments de tapis (2) sont de dimensions différentes à celles des segments de tapis végétal (5).

10. Système de plantations selon l'une des revendications précédentes, **caractérisé en ce que** le tapis inférieur (2) contient des substrats, en particulier sous formes de substances minérales du groupe formé par des engrais, fertilisants, adhésivants pour racines, et similaires.

11. Système de plantations selon l'une des revendications précédentes, **caractérisé en ce que** la concentration des substrats dans les tapis inférieurs (2) est supérieure d'au moins 50 % à la concentration de la couche (5) superposée.

12. Système de plantations selon l'une des revendications précédentes, **caractérisé en ce que** la couche supérieure (15) de l'élément végétal (5) est réalisée comme tissu, tissu à mailles, treillis, voile non tissé ou similaire, la couche de terre (6) composée de substrats, en particulier lave, pierre ponce, zéolithe et activateurs de compostage, ou d'un mélange de ceux-ci, étant disposée sur la couche supérieure (15).

13. Système de plantations selon l'une des revendications précédentes, **caractérisé en ce que** la couche supérieure (15) est constituée de matières naturelles ou de polymères dégradables et consiste en un polymère dégradable en plus d'un treillis ou d'un tissu à mailles.

14. Système de plantations selon l'une des revendications précédentes, **caractérisé en ce que** la couche supérieure (15) est composée de matières naturelles du groupe formé par le sisal, le jute, les fibres de coco ou similaires, ou des mélanges de ceux-ci.

15. Système de plantations selon l'une des revendications précédentes, **caractérisé en ce que** l'élément végétal (5) est fixable sur le tapis inférieur (2) au moyen d'une fixation (13).

16. Système de plantations selon la revendication 15, **caractérisé en ce que** la fixation (13) peut être en matières biodégradables du groupe formé par le bois, les polymères dégradables ou similaires.

17. Système de plantations selon l'une des revendications précédentes, **caractérisé en ce que** la fixation (13) est disposée comme treillis à mailles grossières sur la couche supérieure (15) et à l'intérieur de la couche de terre (6).

18. Système de plantations selon l'une des revendications précédentes, **caractérisé en ce que** les surfaces à végétaliser sont droites, horizontales, ondulées ou inclinées.

19. Utilisation du système de plantations (1) selon l'une des revendications précédentes pour la végétalisation de surfaces, en particulier de toits.
